(19) Europäisches Patentamt
European Patent Office
Office européen des brevets

(11) **EP 4 524 479 A1**

(12) **EUROPEAN PATENT APPLICATION**

(43) Date of publication:
**19.03.2025 Bulletin 2025/12**

(21) Application number: **23197747.1**

(22) Date of filing: **15.09.2023**

(51) International Patent Classification (IPC):
*F24D 10/00* (2022.01)   *F24D 19/10* (2006.01)
*G01K 17/10* (2006.01)   *G06Q 50/06* (2024.01)

(52) Cooperative Patent Classification (CPC):
**F24D 10/00; F24D 19/1048; G01K 17/10;
G06Q 10/04; G06Q 10/20; G06Q 50/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Kamstrup A/S
8660 Skanderborg (DK)**

(72) Inventors:
• **Christiansen, Lars
8660 Skanderborg (DK)**
• **Kristensen, Mick
8660 Skanderborg (DK)**

(74) Representative: **Patentanwälte Hemmer Lindfeld
Frese
Partnerschaft mbB
Wallstraße 33a
23560 Lübeck (DE)**

(54) **METHOD FOR MONITORING A STATE-OF-CONDITION OF PIPES IN A DISTRICT HEATING DISTRIBUTION NETWORK**

(57)   The invention refers to a method for monitoring a state-of-condition of pipes in a district heating distribution network, the heat distribution network comprising a plurality of heat consumer sites (3). The invention includes the following steps: generating data pairs of a flow rate value (Q) and an inlet temperature value ($T_1$) which are determined at a consumer site (3), evaluating whether the data pair has been determined during a steady state period of the inlet temperature ($T_1$) and identifying a data pair which has been determined during a steady state period as a qualified data pair, selecting one or more qualified data pairs and calculating a heat loss coefficient (h) on the basis of the selected data pairs. A heat meter (13) is configured for implementing such method into a heating distribution network.

Fig.4

EP 4 524 479 A1

**Description**

The invention refers to a method for monitoring a state-of-condition of pipes in a district heat distribution network and to a heat meter which is configured to perform this method.

District heating distribution networks are used to distribute heat produced in central heating works to a plurality of consumer sites, which for example may be a plurality of houses to be heated. For measuring and recording the heat consumption at a consumer site, heat meters are placed at the consumer sites. The distribution of the heating fluid to consumer sites is an energy intensive process and requires large central heating works and a well-insulated distribution network of pipes to ensure an efficient energy transfer to the consumer sites. Therefore, it is crucial that the amount of energy lost to the environment during the transfer of the heat is minimized. Typical sources of energy loss are leakages of the heating fluid and poor insulation of both main transportation pipes and the service pipes connecting the main transportation pipes to the consumer sites. Over time, the insulation capability may degrade and lead to a higher heat loss. In view of this, it is desired to monitor the state-of-condition of the pipes, in particular the service pipes connected to the consumer sites.

It is the object of the invention to provide an improved method for monitoring a state-of-condition of pipes in a district heating distribution network, in particular for monitoring the state-of-condition of service pipes connected to the consumer sites, which method allows to monitor the state-of-condition without need of expensive sensor systems and preferably can be implemented into existing heating distribution networks.

This object is achieved by a method having the features defined in claim 1 and by a heat meter having the features defined in claim 13. Preferred embodiments are defined in the subclaims, the following description and the accompanying drawings.

The method according to the invention is used for monitoring a state-of-condition of pipes, in particular service pipes in a district heating distribution network. The heat distribution network comprises a plurality of heat consumer sites. Those heat consumer sites are connected to one or more central heating works via a pipe network. This network consists of main distribution pipes and service pipes which are the pipes connecting main distribution pipes to the heat consumer sites. The heat consumer sites may be single buildings, for example. With a method according to the invention values detected at the heat consumer sites are used to monitor a state-of-condition of the pipes in the network. According to the invention there are generated data pairs of a flow rate value and an inlet temperature value which are determined at the consumer site. The inlet temperature is the temperature of the heating fluid when entering the consumer site. Those values may for example be detected by a heat meter located at the consumer site. In a heat meter the flow rate and the inlet temperature are measured anyway so that preferably no additional sensors are required to carry out the method. The method may use values which are available in the heat meter. The data pairs of a flow rate value and an inlet temperature value preferably each consist of a flow rate value and an inlet temperature value detected at the same time or in a same time period. The data pairs can consist of unprocessed data, i.e. the temperature value as directly measured and/or the directly measured flow rate value. Alternatively, the data pairs may consist of processed data, for example a combination of a directly measured temperature value and a flow rate value calculated as a mean value over a longer time period.

In a next step according to the invention it is evaluated whether the data pair has been determined during a steady state period of the inlet temperature. If the data pair has been determined during a steady state period, this data pair is identified as a qualified data pair. The qualified data pairs may be used for further calculations or evaluations, whereas the not qualified data pairs are disregarded for the further evaluation. In the following step from all the qualified data pairs, there are selected one or more qualified data pairs and a heat loss coefficient is calculated on the basis of these selected data pairs. The described determination of qualified data pairs improves this calculation allowing a more precise conclusion on the state-of-condition of the connected pipe, in particular the connected service pipe. The selection of qualified data pairs allows a further improvement of the evaluation of the state-of-condition of the pipes in the distribution network. By calculating a heat loss coefficient in this way, it is in particular possible to monitor the state-of-condition of the respective service pipe being connected to the consumer site at which the inlet temperature and the flow rate value are measured. By performing this method for several, preferably all consumer sites in the network it is possible to monitor the state-of-condition of a majority of the pipes in the network, preferably of a majority of all service pipes in the heat distribution network.

According to a preferred embodiment the generation of data pairs and the evaluation and identification of qualified data pairs is executed by a computing device at the respective consumer site. This allows a decentralized data collection and data processing reducing the need of data transmission in the network. It is in particular preferred to reduce the amount of data transmission from a heat meter to a head end system, since usually the heat meters are battery powered and it is desired to keep the energy consumption as low as possible. Preferably, the evaluation and identification of qualified data pairs is executed by a computing device of a heat meter which is located at the respective consumer site. This allows to directly process the temperature values and flow values detected by the heat meter by the heat meter's computing device without a need of transmitting data to an external computing device. However, in an alternative embodiment the data pairs consisting of a temperature value and a flow rate value may be sent to an external computing device which monitors a state-of-condition of pipes according to the method described. This for example may be possible if there is sufficient battery power for sending the data.

Preferably the flow rate value and/or the inlet temperature value are detected by sensing means at the consumer site, preferably by sensing means of a heat meter, i.e. sensing means integrated into the heat meter, which is located at the consumer site. Preferably, these are the same sensors which are used for measuring and recording the amount of heat delivered. For this, usually the heat meters contain at least one temperature sensor for detecting the inlet temperature and a flow sensor. The values detected by these sensors are preferably used for the evaluation according to the invention, too.

The flow rate value, preferably, represents an average flow in a time period, wherein the time period preferably is inside the steady state period. Using an average flow value in a period of time, which is preferably inside the steady state period, enables a more precise evaluation, since the influence of short time fluctuations in flow is eliminated.

According to a further embodiment of the invention the steady state period is a period of time in which the variation of the inlet temperature is below a deviation limit. This allows a reliable determination of steady state periods. According to this embodiment the data pairs to be selected for further analysis are taken from qualified data pairs taken in a time period in which the inlet temperature has only changed slightly. Setting a temperature limit value, i.e. a deviation limit, filters away data pairs that are measured at times of bigger changes in fluid inlet temperature which would be outside the thermodynamic model used in the method according to the invention (Newton's law of cooling, as will be explained later).

The deviation limit as described before may be a predefined constant. In an alternative embodiment the deviation limit may be defined as a function of at least one further parameter. This at least one further parameter may be a function of the inlet temperature. The definition as a function of the inlet temperature has the advantage that the limit value dynamically adapts to the level of the inlet temperature. For example, at lower inlet temperatures the deviation limit may be smaller than at higher limit temperatures. In particular, a smaller deviation limit at lower inlet temperatures allows a more precise determination of a heat loss coefficient at low inlet temperatures.

Preferably the deviation limit may be defined as a value from a range of 0,1°C to 5°C, further preferably from a range of 0,2°C to 0,5°C. This may be a constant deviation limit defined in this temperature range or a deviation limit defined as a function of a further parameter as explained before. According to this function the deviation limit for example may vary in the aforementioned temperature range.

According to a further possible embodiment of the method the period of time may at minimum two minutes, further preferably at least five minutes. This means for example that a period of time which is smaller than the minimum value is not regarded as a steady state period according to the method. Thus, only data pairs which are generated for a minimum period of time can be regarded as qualified data pairs.

According to a further special embodiment at least one further criteria is applied for identifying a data pair as a qualified data pair. This further criteria for example is a maximum time duration between two inlet temperature measurements and/or a minimum flow rate during the time of two temperature measurements. This improves the identification of qualified data pairs even more, because any impact of a drifting fluid temperature of the main pipe over time is completely away. Which further criteria is used may depend on the individual configuration or way of operation of the heat distribution network. This allows to adapt the method according to the invention to the individual characteristics of the heat distribution network or the way of operation of the heat distribution network. For example, in a heat distribution system in one city the maximum duration between two inlet temperatures is a suitable further criterium, whereas in another city a further criterium used is the longest steady state period of the inlet temperature. The setting or change of the criterium inside a heat meter may be achieved by a communication between a head end system and the meter or the heat meter may be self-learning, for example test different criteria for a period of time and then evaluate the measurement to choose the best criterium. To choose a minimum flow rate as further criterium may be advantageous to ensure the correct flow rate values are used for calculating the heat loss coefficient. Heat meters using ultrasonic flow rate measurement can be imprecise at very low flow.

According to a further special embodiment the selection of data pairs from the qualified data pairs for calculating a heat loss coefficient is made according to at least one criterium, which criterium preferably is a time instant of the measurement of the qualified data pair, the duration of the steady state period in which the qualified data pair, i.e. the respective temperature value and the respective flow rate value, have been measured and/or whether the flow rate value of the qualified data pairs is in a predefined flow range. By selecting the qualified data pairs close to each other in time, a more correct calculation of the heat loss coefficient is ensured, in particular in situations where the heat works change the temperature of the heating fluid. For example, there may be selected qualified data pairs which time instants are distanced at maximum three hours to each other, further preferably distanced at maximum one hour. To use a criterium defining the longest steady state period in which the data pairs are measured may help to further reduce the number of data pairs required. This may reduce any data transfer allowing to minimize energy consumption. A further possible criterium which for example may be used for selection of qualified data pairs may be a predefined flow rate range. For example, the selection may be done in a way that data pairs from different flow ranges are selected. For example, a portion of qualified data pairs selected for analysis are selected from at least a first flow rate range and a second flow rate range, wherein the first flow rate range represents lower flow rates than the second flow rate range. By selecting the best qualified data pairs from a high flow range and a low flow range, an acceptable representation of the heat loss coefficient is obtained. Qualified data pairs which are outside the first and the second range, for example, can be left out of consideration which avoids spending battery energy on unnecessary calculations. In principle two qualified data pairs - one from each flow rate range - may be sufficient for establishing a mathematical representation of the heat loss coefficient. To further improve the approximation of the heat loss coefficient further flow rate ranges may be included in the selection. For example, a portion of qualified data pairs may be selected from a low flow rate range, a middle flow rate range and a high flow rate range.

The heat loss coefficient may be calculated according to Newton's law of cooling according to the following formula

$$T_1 = T_e + (T_H - T_e) \cdot \exp\left(-\frac{h}{\rho \cdot c} \cdot \frac{1}{Q}\right)$$

wherein $T_1$ is the outlet fluid temperature from a service pipe branching from a main pipe, $T_e$ is the temperature of the environment, $T_H$ is the fluid temperature of the main pipe, for example the temperature of a fluid of a heat reservoir, h is a heat loss coefficient, $\rho$ is the density of heating fluid, c is a specific heat capacity of the fluid, and Q is the flow determined at the consumer site. By use of several data pairs in knowledge of the heat capacity c and the density $\rho$ it is possible to calculate the heat loss coefficient h and the temperature $T_H$ on basis of the measurement of the inlet temperature $T_1$ and the flow Q. The temperature $T_e$ of the cold environment may be regarded as a constant. The reservoir temperature $T_H$ may sometimes be acquired from the heating works.

According to a further possible variation of the method in addition to the selection of qualified data pairs information of the length of a service pipe from a main distribution pipe to the consumer site is acquired and used to calculate a heat transfer coefficient of a length unit of the service pipe on basis of the selected qualified data pairs and the information of the length. The information of the length may for example be taken from a geoinformation system, a map of the heat distribution network or similar data basis. The length information gives a more precise statement on the loss of energy per unit length. The geoinformation data, i.e. information of the length can for example be obtained from the heating works via a head end system. By combining the locally determined heat loss coefficient with the length of the service pipe the amount of energy lost to the surroundings per meter service pipe can be determined. The calculated heat loss coefficient only gives an indication of a high or low value which is not unambiguous because a high value can be caused by a leak in the service pipe or simply be caused by a service pipe that is very long, for example. Combining the heat loss coefficient with the length of the service pipes makes it possible to discriminate between these two situations and give a more precise statement about the state-of-condition of a service pipe.

Furthermore, according to a possible embodiment of the invention it is possible to determine a decline of the inlet temperature over time while the flow rate is zero. Based on this measured decline of inlet temperature it is possible to calculate a pipe-inlet-heat-transfer coefficient. This allows to improve the monitoring of the state-of-condition of the service pipe, since a heat loss by the components close to the heat meter can be monitored and the influence of the heat loss caused by the components on the overall thermal loss, can be eliminated.

According to a further option of the method the calculated heat loss coefficient may be transferred to a head end system and preferably is stored in a data base together with a time stamp and/or information about the respective consumer site. This allows to use the information for historical monitoring of the state-of-condition of a service pipe and, preferably, the service pipes of the entire heat distribution network. For example, in case that the coefficients indicate a deterioration of the state-of-condition over time it is possible to give an alarm. Furthermore, the detected heat loss coefficient may be used for further analysis of the state-of-condition of the heat distribution network in knowledge of further data of the heat distribution network, for example material and/or length of the heat distribution pipes etc. This information may be available to the head end system.

Preferably a plurality of coefficients of heat loss and/or heat transfer coefficients together with time stamps and/or information on the respective consumer site is stored in a data base of a head end system and is used for historical monitoring of the state-of-condition of a service pipe, preferably several or all service pipes in the heat distribution network. In case that the coefficient indicates a deterioration of the state-of-condition over time an alarm may be given. A particularly instructive way of indicating the state-of-condition is by graphical indication via a software program. The applicant of the present invention markets and sells the software named "HeatIntelligence" which is used by the operators in for example heating works. Displayed on monitors the full distribution network is shown with main pipes, service pipes and consumer sites displayed. The heat loss coefficient can for example be displayed either numerically for each pipe or a change of color of a pipe can indicate a state of alarm.

According to a further possible embodiment the steady state period as described before, may follow a fluid inrush period initiated by the heat consumer's call for heating fluid, such as after the opening of a valve in the inlet section. In the fluid inrush period there may be an increase of the inlet temperature, but in the following period it is expected that the inlet temperature is substantially constant. Thus, a steady state period can be expected.

Besides the method as explained and discussed a heat meter for measurement of the heat consumption at a consumer site is subject of the invention. Preferred features of the method as described may be regarded as preferred embodiments of the heat meter, too, and vice versa.

The heat meter is configured to be located at a consumer site for measurement and recording the heat consumption at the consumer site. The heat meter comprises at least one flow sensor and at least one temperature sensor and a computing device. The computing device may be configured to determine the heat consumption. According to the invention the computing device is configured such that it generates data pairs of a flow rate value measured by the flow sensor and an inlet temperature value measured by the temperature sensor. Furthermore, the computing device is configured such that it evaluates whether the data pair has been determined during a steady state period of the inlet temperature. This may be done as described above. Furthermore, the computing device is configured such that it identifies a data pair as a qualified data pair if determined during a steady state period and selects one or more qualified data pairs and calculates a heat loss coefficient on the basis of the selected data pairs. For details refer to the above-mentioned description of the method according to the invention. The inventive configuration of the heat meter allows a monitoring of the state-of-condition of service pipes in an existing heat distribution network just by installing respective heat meters at the consumer sites without the need of introducing further sensing means into the network. Furthermore, it allows the monitoring of the state-of-condition on basis of data detected by the heat meters for measurement and recording of the heat consumption. Thus, no additional sensors are required. The monitoring of the state-of-condition of the service pipes preferably can be realized by use of data which are detected anyway. Preferably the computing device in the heat meter is configured such that it carries out a method as described before. The computing device may comprise a CPU or data processor, storage means allowing to execute a software program configured to implement the method according to the invention. Furthermore, the heat meter preferably comprises communication means configured to transmit data to a head end system and, preferably, receive commands from a head end system. The information transferred to the head end system may comprise a heat loss coefficient calculated in the heat meter in the way described above. A graphical monitoring software at the head end system or on an app of a mobile phone of an operator may display the pipes with the heat loss coefficient value or a graphical representation of the heat loss coefficient or the heat transfer coefficient.

In the following the invention is explained by way of example with reference to the accompanying figures. In these:

Figure 1    schematically shows a district heating distribution network,

Figure 2    shows a diagram of the temperature in relation to the flow rate for different coefficients of heat loss,

Figure 3    shows a diagram of different data pairs of temperature and flow rate,

Figure 4    shows a diagram of flow and temperature over time, and

Figure 5    exemplarily shows a flow chart of a method according to the invention.

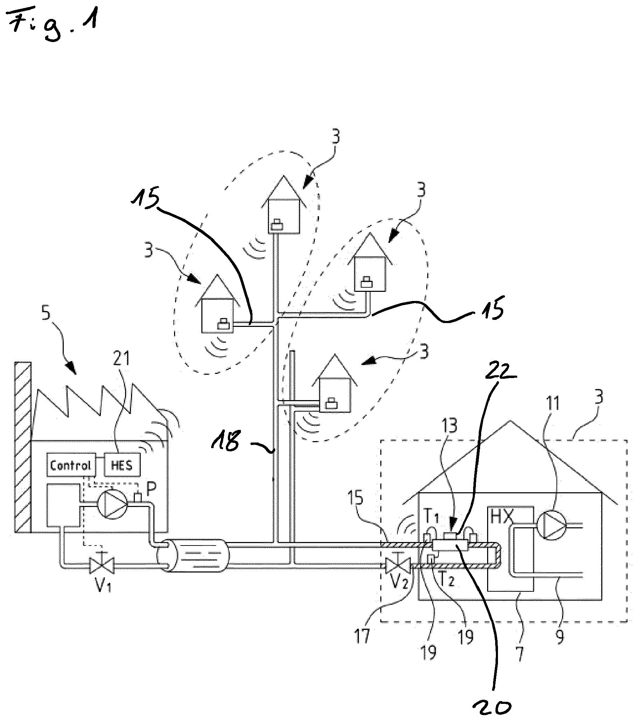

Fig. 1 shows a district heating distribution network for supplying consumer sites 3 with heat from a district heating plant 5 or central heating work 5, respectively. The consumer sites 3 may be private households, industrial consumers, or any other type of consumer site that represents a billable entity for a utility provider managing the district heating plant 5.

In the district heating network 1 as shown in Fig. 1, at the consumer site 3 the heat typically is transferred by way of a heat exchanger 7 as part of a heating system 9 at the consumer site 3. The heating system 9 at the consumer site 3 usually comprises a circulation pump 11 for transporting heated fluid to radiators or underfloor heating.

At each consumer site 3, there is an heat meter 13 installed at a service pipe 15, 17 connecting the consumer site 3 to the heat distribution network and in particular to a main transportation pipe of the network. The heat meters 13 are configured to measure, store and report heat consumption data. Two temperature sensors 19 are provided at the pipes 15, 17 connecting to the feed line and the return line, respectively, for the heat meter 13 to register a temperature differential. The temperature sensor 19 at the feed line 15 is detecting the inlet temperature $T_1$ and the temperature sensor 19 at the return line 17 is detecting the return temperature $T_2$. In combination with a measured fluid flow in any fluid flow situation the heat meter can provide heat consumption data. For measuring the flow the heat meter 13 comprises a flow sensor 20, for example an ultrasonic flow sensor. Furthermore, the heat meter 13 comprises a computing device 22 configured to calculate the heat consumption on basis of the measured flow and temperature difference.

The heat meters 13 and their computing devices 22 are configured to wirelessly transmit, regularly or sporadically based on a predetermined schedule, or upon an external command, the heat consumption data via a wireless communication network (not shown) to a head-end-system (HES) 21 of an automatic meter reading system managed by the utility provider. The head-end-system (HES) 21 is shown in Fig. 1 to be located within the district heating plant 5. However, it should be understood that the head-end-system (HES) 21 may be located anywhere, e.g. in form of a cloud-based system or a computer server anywhere else. The automatic meter reading system may comprise a dedicated wireless communication network or may make use of an existing wireless communication network, e.g. a cellular mobile phone network, for communication between the head-end-system (HES) 21 and the heat meters 13 installed at the different consumer sites 3.

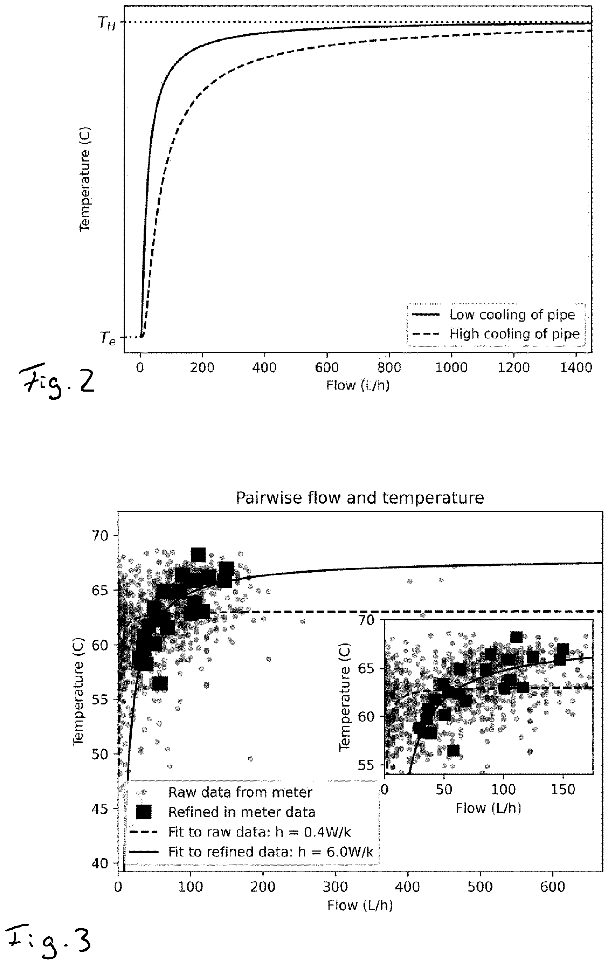

The method according to the invention will be described by way of example in the following. This method allows to monitor the state-of-condition of the pipes in the heating distribution network as described before, in particular to monitor the state-of-condition of the service pipes 15 and 17 connecting the main transportation pipes 18 to the consumer sites 3. The method may be implemented by a software module executed by the computing devices 22 of the heat meters 13. The computing devices 22 may comprise a CPU or a data processor and necessary storage means for executing a respective software program in addition to the calculation of the heat consumption. A bad condition of the pipe, in particular a service pipe 15 being a pipe in the inlet line, may result in an increase of heat loss in the network. That condition of the pipe may be a result of deterioration because of aging or because of a damage. An increase in heat loss may result in a too low temperature at the consumer site or require an increased flow to transport the required heat energy to the consumer site. The diagram in figure 2 shows a relation between the flow rate and the temperature at the inlet of the consumer site 3, i.e. the inlet temperature $T_1$ which is detected by the temperature sensor 19 at the inlet line. Figure 2 shows the relation between temperature and flow rate for two different coefficients of heat loss, i.e. a low cooling of the inlet pipe and a high cooling of the inlet pipe. The temperature $T_e$ is the temperature of the cold environment, i.e. the environment of the pipe. This temperature is regarded as being constant. The temperature $T_H$ is the reservoir temperature, in particular the temperature of the fluid in the main transportation pipe 18. It can be seen in figure 2 that a higher flow is required to achieve the same temperature $T_1$ if there is a high heat loss of the inlet pipe compared to a low heat loss of the inlet pipe. This difference can be represented by a heat loss coefficient h. According to the method of the invention it is desired to calculate such a heat loss coefficient h in the heat meter 13 on basis of temperature and flow rate detected by the heat meter 13. The heat meters 13 continuously detects the inlet temperature $T_1$ and the flow rate Q by use of a temperature sensor 19 and the flow sensor 20. On basis of these measured values data pairs of inlet temperature $T_1$ and flow Q detected at the same time or in the same time period are determined. Figure 3 shows these data pairs as dots in the diagram representing the relation between flow rate and temperature as described with reference to figure 2. It is the intention of the invention to fit a curve into these data points defining the curve as discussed with reference to figure 2, i.e. the curve representing the relation between flow rate and temperature for a certain heat loss coefficient h. For this purpose according to the invention, in the cloud of small dots as shown in figure 3 qualified data pairs are identified which offer a good basis to fit the desired curve. According to the invention it is evaluated whether a generated data pair has been determined during a steady state period of the inlet temperature. If the data pair has been determined during such a steady state period, i.e. the inlet temperature and the flow rate have been measured during a steady state period, the respective data pair may be identified as a qualified data pair which may be selected for the following calculation of a heat loss coefficient.

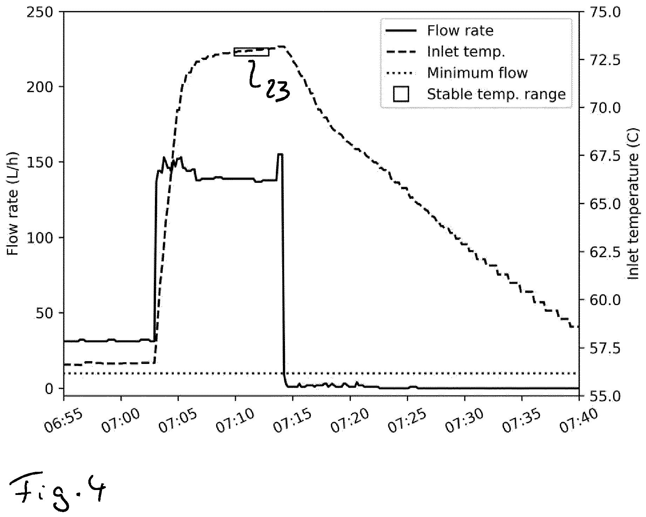

The diagram according to figure 4 shows the flow rate and the inlet temperature plotted against the time. The flow rate is the black line, whereas the dashed line shows the inlet temperature. The dotted line shows the minimum flow. In this example at 7'o clock there is a low consumption for a period of time which ends at around 7:03 o'clock. Because in this time period the flow rate has been low the inlet temperature $T_1$ (shown on the right axis of the diagram) is also low. Then at approximately 7:03 o'clock the flow increases rapidly to around 145 L/h and stays at this level until approximately 7:14 o'clock, for example caused by someone taking a shower at the consumer site 3. During this time for example the water supplied by the service pipe 15 is used for heating the water at the consumer site 3, for example by use of the heat exchanger 7. The inlet temperature $T_1$ of the heating fluid is increasing to around 72°C at 7:06 o'clock and then for the next ten minutes is substantially stable, i.e. only increasing 1°C to 73°C. Thus, in this time interval 23 from approximately 7:06 to 7:15 o'clock a steady state situation has appeared. The inlet temperature $T_1$ of the fluid is almost constant in this steady state situation and also the flow rate has a steady state period in this interval. Therefore, a data pair of flow Q and inlet temperature $T_1$ detected in this time period, the steady state period 23, is identified as a qualified data pair which may be used for the further calculation of a heat loss coefficient h. In this way qualified data pairs are identified in the cloud of data points as shown in figure 3 and in the next step some of these qualified data pairs are selected and on the basis of these selected data pairs a heat loss coefficient h is calculated preferably according to Newton's law of cooling as described above.

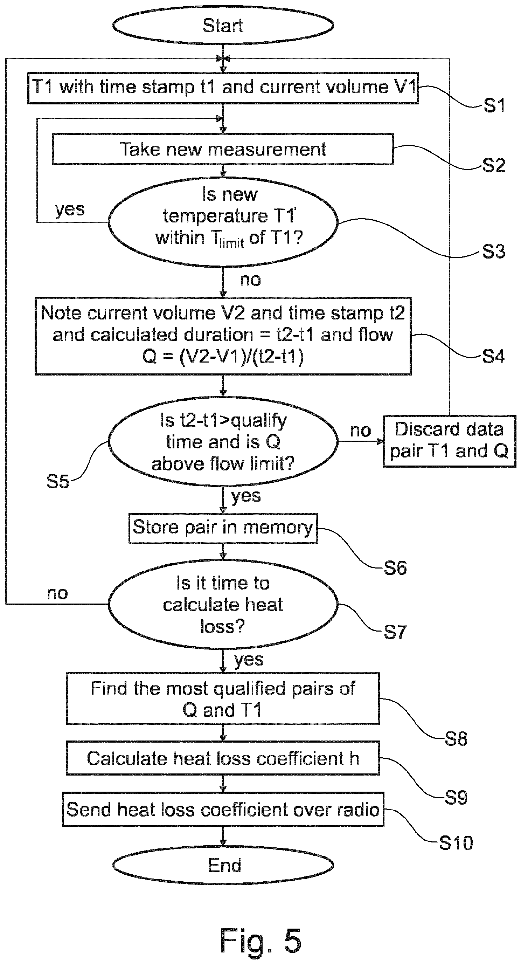

An example for the entire method is explained with reference to the flow diagram shown in figure 5. After the start of the sequence in step S1 at the respective consumer site 3 the inlet temperature $T_1$ is measured and stored with a time stamp t1 and a measured current volume of V1 of the heating fluid delivered to the respective consumer site 3. In the next step S2 a further measurement of the inlet temperature and volume is done at a second point in time and stored together with the respective time stamp t2. In the next step S3 it is evaluated whether the new temperature $T_1$' is within a deviation limit $T_{limit}$ of $T_1$, i.e. the temperature $T_1$' does not deviate from the temperature $T_1$ by more than the deviation limit $T_{limit}$. If the deviation is below the limit a new measurement is taken in step S2. If the deviation is above the limit in the next step S4 the current volume V2 is detected and stored with a time stamp t2. Then the duration of the time t2-t1 is calculated and on basis of the detected volumes the flow rate Q= (V2-V1)/(t2-t1). In the next step S5 it is evaluated whether the data pair consisting of the temperature $T_1$ detected at time t1 and the measured flow rate Q for the time interval t2-t1 can be regarded or identified as a qualified data pair. In this example this is the case if additionally the duration of time period t2-t1 is above a predefined qualified time and if the flow rate Q is above a flow rate limit. If this is not the case the respective data pair consisting of the values $T_1$ and Q is disregarded and the sequence starts again at step S1. If the data pair consisting of the inlet temperature $T_1$ and the flow rate Q fulfills the requirement according to step S5 the data pair is stored as a quailed data pair in step S6. This qualified data pair is a data pair detected during a steady state period of the inlet temperature $T_1$, since it fulfills the condition according to step S3. Furthermore, the data pair fulfills the additional criteria according to step S5 which in this example are considered as additional criteria for identifying a qualified data pair.

In step S7 it is evaluated whether it is time to calculate a heat loss or a heat loss coefficient h. If the calculation of the heat loss is not yet required, the sequence again starts with step S1 to determine a further data pair, in particular a further qualified data pair. By this procedure many data pairs and in particular a multitude of qualified data pairs is determined. After a predefined period of time or when a required number of suitable qualified data pairs has been detected, following on step S7 the calculation of the heat loss coefficient starts. For this in step S8 one or more of the qualified data pairs are selected for the further calculation process. This may be done by a predefined criterium to find the most qualified pairs of Q and $T_1$. Then, following, in step S9 a heat loss coefficient h is calculated according to Newton's law of cooling. In step S10 the calculated heat loss coefficient a is sent to the head end system 21 as shown in figure 1 for further evaluation or calculation. In the head end system 21 for example the heat loss coefficient h can be used as a basis for calculating a heat transfer coefficient K for a length unit of the service pipe, wherein a known length of the service pipe is used by the head end system 21. Furthermore, the head end system 21 can monitor the status of the network by comparing a heat loss coefficient h and/or a heat transfer coefficient K as mentioned before with nominal values and a display deviation or a deterioration of certain pipes in the network.

It has to be understood that the method as described with reference to figure 3 preferably is carried out for several, preferably a majority or all of the consumer sites 3. The method may be executed by a software module integrated into the computing device 22 of a heat meter 13 at the respective consumer site 3.

## List of reference numerals

| | |
|---|---|
| 3 | consumer site |
| 5 | heating plant |
| 7 | heat exchanger |
| 9 | heating system |
| 11 | circulation pump |
| 13 | heat meter |
| 15, 17 | service pipes |
| 18 | main transportation or distribution pipe |
| 19 | temperature sensor |
| 20 | flow sensor |
| 21 | head end system |
| 22 | computing device |
| 23 | steady state period |
| H | heat loss coefficient |
| $T_1$ | inlet temperature |
| $T_2$ | return temperature |
| $T_{limit}$ | temperature deviation limit |
| Q | flow rate |
| V1, V2 | volume |
| 11, t2 | points in time |
| S1 - S10 | method steps |

## Claims

1. Method for monitoring a state-of-condition of pipes in a district heating distribution network, the heat distribution network comprising a plurality of heat consumer sites (3),
**characterized by** following steps:

    generating data pairs of a flow rate value (Q) and an inlet temperature value ($T_1$) which are determined at a consumer site (3),
    evaluating whether the data pair has been determined during a steady state period of the inlet temperature ($T_1$) and identifying a data pair which has been determined during a steady state period as a qualified data pair,
    selecting one or more qualified data pairs and calculating a heat loss coefficient on the basis of the selected data pairs.

2. Method according to claim 1, **characterized in that** the generation of data pairs and the evaluation and identification of qualified data pairs is executed by a computing device (22) at the respective consumer site (3), preferably by a computing device (22) of a heat meter (13) located at the respective consumer site (3).

3. Method according to claim 1 or 2, **characterized in that** the flow rate value (Q) and/or the inlet temperature value($T_1$) are detected by sensing means at the consumer site (3), preferably by sensing means of a heat meter (13) located at the consumer site (3).

4. Method according to one of the preceding claims, **characterized in that** the flow rate value (Q) represents an average flow in a time period, wherein the time period preferably is inside the steady state period.

5. Method according to one of the preceding claims, **characterized in that** the steady state period is a period of time in which a variation of the inlet temperature ($T_1$) is below a deviation limit.

6. Method according to claim 5, wherein the deviation limit is a predefined constant or a deviation limit defined as a function of at least one further parameter, preferably defined as a function of the inlet temperature ($T_1$).

7. Method according to claim 5 or 6, **characterized in that** the deviation limit is defined as a value from the range of 0,1°C to 5°C, preferably from the range of 0,2°C to 0,5°C.

8. Method according to one of the claims 5 to 7, **characterized in that** the period of time is at minimum two minutes, preferably at least five minutes.

9. Method according to one of the preceding claims, **characterized in that** at least one further criteria is applied for identifying a data pair as a qualified data pair, which further criteria preferably is a maximum time duration between two inlet temperature ($T_1$) measurements and/or a minimum flow rate during the time of two temperature measurements.

10. Method according to one of the preceding claims, **characterized in that** the selection from qualified data pairs for calculating a heat loss coefficient (h) is made according to at least one criterium, which criterium preferably is the time instant of the measurement of the qualified data pair, the duration of the steady state period in which the qualified data pair has been measured and/or whether the flow rate value (Q) of the qualified data pair is in a predefined flow rate range.

11. Method according to one of the preceding claims, **characterized in that** in addition to the selection of qualified data pairs information of the length of a service pipe (15, 17) from a main distribution pipe (18) to the consumer site (3) is acquired and used to calculate a heat transfer coefficient of a length unit of the service pipe (15, 17) on basis of the selected qualified data pairs and the information of the length.

12. Method according to one of the preceding claims, **characterized in that** the calculated heat loss coefficient (h) is transferred to a head end system (21) and preferably is stored in a data base together with a time stamp and/or information about the respective consumer site (3).

13. Heat meter (13) for measurement of the heat consumption at a consumer site (3) comprising at least one flow sensor (20) and at least one temperature sensor (19) and a computing device (22) configured such

that it generates data pairs of a flow rate value (Q) measured by the flow sensor (20) and an inlet temperature value ($T_1$) measured by the temperature sensor (19),
that it evaluates whether the data pair has been determined during a steady state period of the inlet temperature ($T_1$) and
that it identifies a data pair as a qualified data pair if determined during a steady state period, and
selects one or more qualified data pairs and calculates a heat loss coefficient on the basis of the selected data pairs.

14. Heat meter according to claim 13, **characterized in that** the computing device (22) is configured such that it carries out a method according to one of the claims 1 to 12.

Fig. 1

Fig. 2

Fig. 3

Fig. 4

Fig. 5

Europäisches
Patentamt

European
Patent Office

Office européen
des brevets

# EUROPEAN SEARCH REPORT

Application Number

**EP 23 19 7747**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 531 368 A1 (KAMSTRUP AS [DK]) 28 August 2019 (2019-08-28) * paragraph [0010] – paragraph [0023]; figures 1, 2 * ----- | 1-14 | INV. F24D10/00 F24D19/10 G01K17/10 G06Q50/06 |
| Y | EP 3 147 575 A1 (TECHEM ENERGY SERVICES GMBH [DE]) 29 March 2017 (2017-03-29) * paragraph [0012] – paragraph [0019] * ----- | 1-14 | |
| A | EP 3 112 823 A1 (KAMSTRUP AS [DK]) 4 January 2017 (2017-01-04) * the whole document * ----- | 1-14 | |
| A | EP 2 000 788 A1 (KAMSTRUP AS [DK]) 10 December 2008 (2008-12-10) * the whole document * ----- | 1-14 | |
| A | EP 4 215 825 A1 (GS POWER CO LTD [KR]) 26 July 2023 (2023-07-26) * the whole document * ----- | 1-14 | |
| A | CN 111 047 732 A (QINGDAO HISENSE TRANS TECH CO) 21 April 2020 (2020-04-21) * the whole document * ----- | 1-14 | TECHNICAL FIELDS SEARCHED (IPC) F24D G01W G06Q G01K |

The present search report has been drawn up for all claims

| Place of search | Date of completion of the search | Examiner |
|---|---|---|
| Munich | 6 February 2024 | Riesen, Jörg |

EPO FORM 1503 03.82 (P04C01)

## ANNEX TO THE EUROPEAN SEARCH REPORT
## ON EUROPEAN PATENT APPLICATION NO.

EP 23 19 7747

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2024

| Patent document cited in search report | | Publication date | Patent family member(s) | | Publication date |
|---|---|---|---|---|---|
| EP 3531368 | A1 | 28-08-2019 | CN | 110177005 A | 27-08-2019 |
| | | | DK | 3531368 T3 | 20-12-2021 |
| | | | EP | 3531368 A1 | 28-08-2019 |
| | | | LT | 3531368 T | 27-12-2021 |
| | | | PL | 3531368 T3 | 31-01-2022 |
| EP 3147575 | A1 | 29-03-2017 | DE | 102015116001 B3 | 15-12-2016 |
| | | | EP | 3147575 A1 | 29-03-2017 |
| EP 3112823 | A1 | 04-01-2017 | NONE | | |
| EP 2000788 | A1 | 10-12-2008 | NONE | | |
| EP 4215825 | A1 | 26-07-2023 | EP | 4215825 A1 | 26-07-2023 |
| | | | KR | 102418408 B1 | 06-07-2022 |
| | | | US | 2023235897 A1 | 27-07-2023 |
| CN 111047732 | A | 21-04-2020 | NONE | | |

EPO FORM P0459

For more details about this annex : see Official Journal of the European Patent Office, No. 12/82